# EUROPEAN PATENT APPLICATION

(11) **EP 2 474 988 A1**
(43) Date of publication of application: **11.07.2012**
(21) Application number: 12150131.6
(22) Date of filing: 04.01.2012
(51) Int. Cl.: H01H 9/18, H05B 33/08

(54) **Light-emitting diode drive control circuit**

(30) Priority: 06.01.2011 CN 201110001514
(71) Applicant: Everlight Electronics Co., Ltd, New Taipei City 23860 (TW)
(72) Inventor: Chen, Huang Ying, 23860 New Taipei City (TW); Hung, Yu-Wen, 23860 New Taipei City (TW); Lin, Ying-Chu, 23860 New Taipei City (TW)
(74) Representative: Becker Kurig Straus

(57) **Abstract**

The present invention provides a light-emitting diode (LED) drive control circuit having an input terminal and an output terminal. The input terminal and a switching device are coupled in series between power supply terminals. The output terminal is coupled to an LED. The switching device includes a single-pole double-throw switch. A first branch of the single-pole double-throw switch is a wire. A second branch of the single-pole double-throw switch includes a resistor and an indicator in series. The circuit includes a semiconductor switch that is either on or off. When the single-pole double-throw switch is switched to the first branch, the semiconductor switch is on and turns on the LED. When the single-pole double-throw switch is switched to the second branch, the semiconductor switch is off and turns off the LED. The circuit can effectively turn the LED on and off to avoid power leakage and slight emission of light.

## Description

### CROSS-REFERENCE TO RELATED APPLICATION

This application claims the priority benefit of China patent application serial no. 201110001514.5, filed on January 6, 2011. The entirety of the above-mentioned patent application is hereby incorporated by reference and made a part of this specification.

### BACKGROUND

### Technical Field

The present invention relates to a circuit of light-emitting diode (LED) drive control and, more particularly, to a type of LED drive control circuit suitable to be connected to a switch with an indicator.

### Description of Related Art

In typical lighting circuits, a switch with night vision functionality may be used. An indicator installed in the switch is switched on when the switching device is switched off, aiding a user in finding the switch in the dark. At this time, the light loading typically experiences a small amount of voltage drop. However, as traditional light loading (such as fluorescent light and incandescent light, etc.) tends to have large turn-on voltage, a small amount of voltage drop cannot turn on the light.

Along with the development of semiconductor materials and chemical technology, LED is gradually replacing traditional light sources. As the turn-on voltage of LED is typically much lower than the turn-on voltage of traditional fluorescent light and incandescent light, power saving is an advantage of LED.

Thus, when the above-described switch is connected to an LED lamp, there is a small amount of voltage drop across the LED since the turn-on voltage of LED is relatively low. As a result, the LED emits light and thereby results in power leakage.

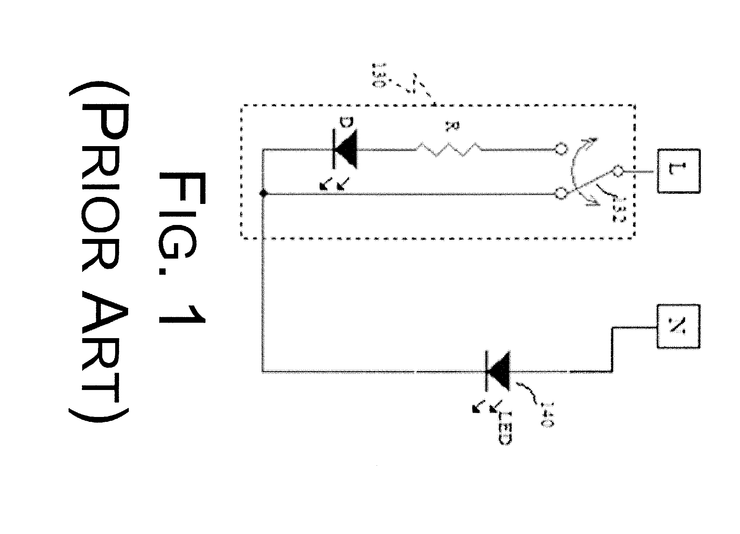

Figure 1 is a schematic diagram of a circuit of a prior art LED candle light. An LED 140 and a switch 130 are coupled in series between terminals L and N of an alternating current (AC) power supply. The switch 130, which is equipped with an indicator D, includes a single-pole double-throw switch 132. A first branch (the branch on the right side in Figure 1) of the single-pole double-throw switch 132 is wire and a second branch (the branch on the left side in Figure 1) of the single-pole double-throw switch 132 includes a resistor R and the indicator D coupled in series. When the switch 130 is switched on, the single-pole double-throw switch 132 is switched to the first branch, forming a closed-loop circuit with the LED 140 and thus turning on the LED 140. When the switch 130 is switched off, the single-pole double-throw switch 132 is switched to the second branch, forming a closed-loop circuit with the LED 140 through the resistor R and the indicator D. There is still some voltage drop across the LED 140 that causes the LED 140 to emit light albeit slightly, resulting in power leakage. Such power leakage is undesirable in practical applications.

### SUMMARY

An objective of the present invention is to resolve the power leakage issue associated with prior art LED drive control circuits. The present invention provides a novel and non-obvious LED drive control circuit that prevents power leakage and slight emission of light by the LED when the switching device is switched off. To achieve the aforementioned objective, various embodiments of the LED drive control circuit are described herein.

In one aspect, an LED drive control circuit may have an input terminal and an output terminal. The input terminal and a switching device may be coupled in series between power supply terminals. The output terminal may be coupled to an LED. The switching device may include a single-pole double-throw switch. A first branch of the single-pole double-throw switch may be a wire and a second branch of the single-pole double-throw switch may include a resistor and an indicator coupled in series. The LED drive control circuit may include a semiconductor switch that is either on or off. The semiconductor switch is switched on to turn on the LED when the single-pole double-throw switch is switched to the first branch. The semiconductor switch is switched off to turn off the LED when the single-pole double-throw switch is switched to the second branch.

In one embodiment, the LED drive control circuit may further comprise a voltage divider circuit coupled to the semiconductor switch. The voltage divider circuit may be coupled between the semiconductor switch and the switching device.

In one embodiment, the voltage divider circuit may comprise a first voltage dividing resistor and a second voltage dividing resistor. A node between the first voltage dividing resistor and the second voltage dividing resistor may be coupled to the semiconductor switch.

In one embodiment, the semiconductor switch may comprise a field effect transistor (FET), a bipolar junction transistor (BJT), or a triode for alternating current (TRIAC). The semiconductor switch has a characteristic such that it has a constant turn-on voltage or turn-on current. When the supplied voltage is higher than the turn-on voltage or when the supplied current is higher than the turn-on current, the semiconductor switch is switched on. When the supplied voltage is lower than the turn-on voltage or when the supplied current is lower than the turn-on current, the semiconductor switch is switched off.

In one embodiment, the LED drive control circuit may further comprise a DIAC coupled between the semiconductor switch and the voltage divider circuit.

In one embodiment, the semiconductor switch may comprise a DIAC.

In one embodiment, the LED drive control circuit may comprise a rectifier circuit coupled between the switching device and the semiconductor switch.

In one embodiment, the LED drive control circuit may further comprise a current-limiting resistor coupled between the LED and the semiconductor switch.

In one embodiment, the LED may comprise one or more LEDs coupled in series or in parallel.

In another aspect, an LED drive control circuit may have an input terminal and an output terminal. The input terminal and a switching device may be coupled in series between power supply terminals. The output terminal may be coupled to an LED. The switching device may include a single-pole double-throw switch. A first branch of the single-pole double-throw switch may be a wire and a second branch of the single-pole double-throw switch may include a resistor and an indicator coupled in series. The LED drive control circuit may comprise a resistor coupled to the switching device. The resistor is coupled to the LED in parallel. The resistor may have a resistance approximately equal to a resistance of the LED.

In one aspect, a light-emitting diode (LED) drive control circuit comprises an input terminal, an output terminal and a semiconductor switch. The input terminal is coupled to a switching device in series between terminals of a power supply. The switching device includes a first branch and a second branch. The output terminal coupled to an LED. The semiconductor switch is driven to turn on or off the LED when the switch device is switched to the first branch or the second branch.

In one embodiment, the semiconductor switch comprises a field effect transistor (FET), a bipolar junction transistor (BJT), or a triode for alternating current (TRIAC)

In one embodiment, the semiconductor switch comprises an insulated gate bipolar transistor (IGBT).

In one embodiment, the semiconductor switch comprises a diode for alternating current (DIAC).

In one embodiment, a current-limiting resistor is coupled between the LED and the semiconductor switch.

In one embodiment, a voltage divider circuit is coupled between the semiconductor switch and the switching device.

In one embodiment, a diode for alternating current (DIAC) is coupled between the semiconductor switch and the voltage divider circuit.

In one embodiment, a rectifier circuit is coupled between the switching device and the voltage divider circuit.

In one embodiment, a current-limiting resistor is coupled between the LED and the semiconductor switch. A voltage divider circuit is coupled between the semiconductor switch and the switching device. A rectifier circuit is coupled between the switching device and the voltage divider circuit.

In one embodiment, a diode for alternating current (DIAC) is coupled between the semiconductor switch and the voltage divider circuit.

### BRIEF DESCRIPTION OF THE DRAWINGS

The present invention can be more fully understood by reading the subsequent detailed description and examples with references made to the accompanying drawings.

Figure 1 is a schematic diagram of a prior art circuit.

Figure 2 is a schematic diagram of a circuit in accordance with a first embodiment of the present invention.

Figure 3 is a schematic diagram of a circuit in accordance with a second embodiment of the present invention.

Figure 4 is a schematic diagram of a circuit in accordance with a third embodiment of the present invention.

Figure 5 is a schematic diagram of a circuit in accordance with a fourth embodiment of the present invention

Figure 6 is a schematic diagram of a circuit in accordance with a fifth embodiment of the present invention.

### DETAILED DESCRIPTION OF PREFERRED EMBODIMENTS

### First Exemplary Implementation

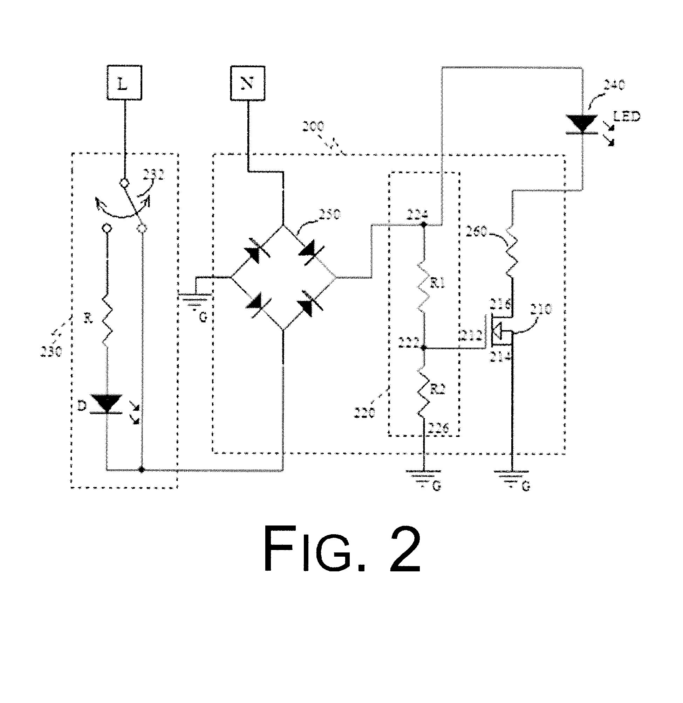

Figure 2 illustrates a LED drive control circuit 200 in accordance with a first embodiment of the present invention.

The LED drive control circuit 200 and a switching device 230 are coupled in series between terminals L and N of an AC power supply. The input terminals of the LED drive control circuit 200 are respectively coupled to the switching device 230 and the terminals L and N of the AC power supply. The output terminals of the LED drive control circuit 200 are electrically coupled to at least one LED 240.

The switching device 230 is equipped with an indicator D and includes a single-pole double-throw switch 232. A first branch (the branch on the right side in Figure 2) of the single-pole double-throw switch 232 is wire and a second branch (the branch on the left side in Figure 2) includes a resistor R and the indicator D coupled in series.

The LED drive control circuit 200 includes a semiconductor switch 210 and a voltage divider circuit 220. In the illustrated embodiment, the semiconductor switch 210 is a field-effect transistor (FET) having three terminals: a first terminal 212 as the FET gate, a second terminal 214 as the FET source, and a terminal 216 as the FET drain.

The voltage divider circuit 220 includes a first voltage dividing resistor R1 and a second voltage dividing resistor R2 that are coupled in series. The voltage divider circuit 220 may be configured differently in other embodiments. The first terminal 212 of the semiconductor switch 210 is electrically coupled to a node 222 between the first voltage dividing resistor R1 and the second voltage dividing resistor R2. The second terminal 214 of the semiconductor switch 210 and a node 226 of the second voltage dividing resistor R2 are equipotential.

The LED drive control circuit 200 further includes a rectifier circuit 250 and a current-limiting resistor 260. The rectifier circuit 250 includes four rectifier terminals. The upper and lower terminals of rectifier circuit 250 are electrically coupled between the terminals L and N of the AC power supply. The right terminal of the rectifier circuit 250 is coupled to the input terminal of the voltage divider circuit 220. The left terminal of the rectifier circuit 250, the node 226 of the second voltage dividing resistor R2, and the second terminal 214 of the semiconductor switch 210 are equipotential (e.g., 0 volt or low-voltage equipotential point G, not necessarily grounded).

The current-limiting resistor 260 is electrically coupled between the LED 240 and the third terminal 216 of the semiconductor switch 210 to protect the LED 240. Moreover, in one embodiment, the current-limiting resistor 260 is electrically coupled between the LED 240 and a node 224 of the first voltage dividing resistor R1. The node 224 of the first voltage dividing resistor R1 is located in the input terminal of the voltage divider circuit 220. In other embodiments, the current-limiting resistor 260 may be substituted with a current-limiting electronic component, chip, integrated circuit (IC) or diode to achieve the same effect. The LED 240 is electrically coupled between the node 224 of the first voltage dividing resistor R1 and the current-limiting resistor 260. The LED 240 may comprise a single LED or multiple LEDs coupled in series or in parallel. In one embodiment, the LED 240 includes a plurality of LEDs having the same color or different colors.

Notably, the LED 240 and the current-limiting resistor 260 may optionally be electrically coupled between the second terminal 214 of the semiconductor switch 210 and the equipotential point G. Accordingly, the LED 240 may be electrically coupled between the current-limiting resistor 260 and the second terminal 214 of the semiconductor switch 210, and the node 224 of the first voltage dividing resistor R1 may be directly and electrically coupled to the third terminal 216 of the semiconductor switch 210. Additionally, in one embodiment, the currently-limiting resistor 260 may be electrically coupled between the LED 240 and the second terminal 214 of the semiconductor switch 210. In one embodiment, depending on the need, a diode for alternating current (DIAC) may be disposed between the node 222 between the voltage dividing resistor R1 and the voltage dividing resistor R2 of the voltage divider circuit and the first terminal 212 of the semiconductor switch 210.

The principle of operation of the LED drive control circuit 200 will now be described. The input terminal of the AC power supply provides AC voltage to the LED drive control circuit 200. When the switching device 230 is switched on, the single-pole double-throw switch 232 is switched to the first branch. Through the wire of the first branch, the input AC voltage is first converted to direct current (DC) voltage by the rectifier circuit 250 and then divided by the voltage divider circuit 220. The resultant divided voltage is sufficient, i.e., above a threshold voltage level, to drive the semiconductor switch 210 to conduct current, allowing current to flow through the LED 240 to emit light. When the switching device 230 is switched off, the single-pole double-throw switch 232 is switched to the second branch. Through the resistor R and the indicator D, the input AC voltage is first converted to DC voltage by the rectifier circuit 250 and then divided by the voltage divider circuit 220. The resultant divided voltage is insufficient to drive the semiconductor switch 210 to conduct current, and the semiconductor switch 210 is switched off. As no current flows through the LED 240, the LED 240 is in a normal off state. Consequently, there is no power leakage or slight emission of light by the LED 240.

### Second Exemplary Implementation

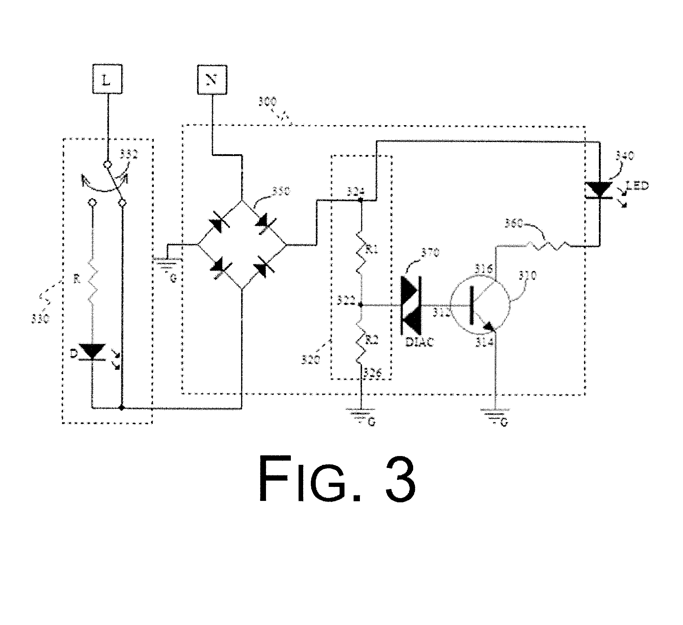

Figure 3 illustrates a LED drive control circuit 300 in accordance with a second embodiment of the present invention.

The LED drive control circuit 300 and a switching device 330 are coupled in series between terminals L and N of an AC power supply. The input terminals of the LED drive control circuit 300 are respectively coupled to the switching device 330 and the terminals L and N of the AC power supply. The output terminals of the LED drive control circuit 300 are electrically coupled to at least one LED 340.

The switching device 330 is equipped with an indicator D and includes a single-pole double-throw switch 332. A first branch (the branch on the right side in Figure 3) of the single-pole double-throw switch 332 is wire and a second branch (the branch on the left side in Figure 3) includes a resistor R and the indicator D coupled in series.

The LED drive control circuit 300 includes a semiconductor switch 310 and a voltage divider circuit 320. In the illustrated embodiment, the semiconductor switch 310 is a bipolar junction transistor (BJT) having three terminals: a first terminal 312 as the BJT base, a second terminal 314 as the BJT emitter, and a third terminal 316 as the BJT collector.

The voltage divider circuit 320 includes a first voltage dividing resistor R1 and a second voltage dividing resistor R2 that are coupled in series. The voltage divider 320 may be configured differently in other embodiments.

The LED drive control circuit 300 also includes a diode for alternating current (DIAC) 370. A first terminal of the DIAC 370 is electrically coupled to a node 322 between the first voltage dividing resistor R1 and the second voltage dividing resistor R2. A second terminal of the DIAC 370 is electrically coupled to the first terminal 312 of the semiconductor switch 310.

The LED drive control circuit 300 further includes a rectifier circuit 350 and a current-limiting resistor 360. The rectifier circuit 350 includes four rectifier terminals. The upper and lower terminals of the rectifier circuit 350 are electrically coupled between the terminals L and N of the AC power supply. The right terminal of the rectifier circuit 350 is coupled to the input terminal of the voltage divider circuit 320. The left terminal of the rectifier circuit 350, a node 326 of the second voltage dividing resistor R2, and the second terminal 314 of the semiconductor switch 310 are equipotential (e.g., 0 volt or low-voltage equipotential point G, not necessarily grounded).

The current-limiting resistor 360 is electrically coupled between the LED 340 and the third terminal 316 of the semiconductor switch 310 to protect the LED 340. Moreover, in one embodiment, the current-limiting resistor 360 is electrically coupled between the LED 340 and a node 324 of the first voltage dividing resistor R1. The node 324 of the first voltage dividing resistor R1 is located in the input terminal of the voltage divider circuit 320. In other embodiments, the current-limiting resistor 360 may be substituted with a current-limiting electronic component, chip, IC or diode to achieve the same effect. The LED 340 is electrically coupled between the node 324 of the first voltage dividing resistor R1 and the current-limiting resistor 360. The LED 340 may comprise a single LED or multiple LEDs coupled in series or in parallel. In one embodiment, the LED 340 includes a plurality of LEDs having the same color or different colors.

Notably, the LED 340 and the current-limiting resistor 360 may optionally be electrically coupled between the second terminal 314 of the semiconductor switch 310 and the equipotential point G. Accordingly, the LED 340 may be electrically coupled between the current-limiting resistor 360 and the second terminal 314 of the semiconductor switch 310, and the node 324 of the first voltage dividing resistor R1 may be directly and electrically coupled to the third terminal 316 of the semiconductor switch 310. Additionally, in one embodiment, the current-limiting resistor 360 may be electrically coupled between the LED 340 and the second terminal 314 of the semiconductor switch 310.

The principle of operation of the LED drive control circuit 300 will now be described. The input terminal of the AC power supply provides AC voltage to the LED drive control circuit 300. When the switching device 330 is switched on, the single-pole double-throw switch 332 is switched to the first branch. Through the wire of the first branch, the input AC voltage is first converted to direct current (DC) voltage by the rectifier circuit 350 and then divided by the voltage divider circuit 320. The resultant divided voltage is sufficient, i.e., above a threshold voltage level, to drive and turn on the DIAC 370, which in turn switch on the semiconductor switch 310 to conduct current, allowing current to flow through the LED 340 to emit light. When the switching device 330 is switched off, the single-pole double-throw switch 332 is switched to the second branch. Through the resistor R and the indicator D, the input AC voltage is first converted to DC voltage by the rectifier circuit 350 and then divided by the voltage divider circuit 320. The resultant divided voltage is insufficient to drive or switch on the DIAC 370 and thus the semiconductor switch 310 is switched off. As no current flows through the LED 340, the LED 340 is in a normal off state. Consequently, there is no power leakage or slight emission of light by the LED 340.

### Third Exemplary Implementation

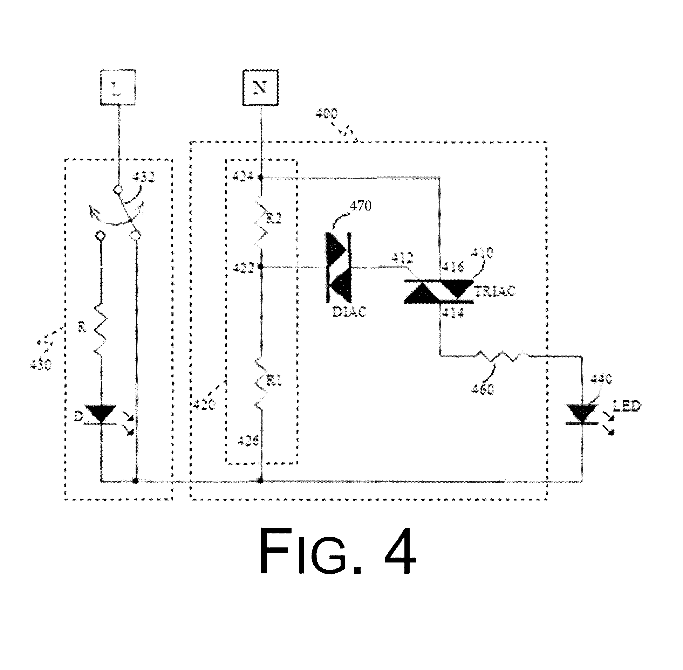

Figure 4 illustrates a LED drive control circuit 400 in accordance with a third embodiment of the present invention.

The LED drive control circuit 400 and a switching device 430 are coupled in series between terminals L and N of an AC power supply. The input terminals of the drive control circuit 400 are respectively coupled to the switching device 430 and the terminals L and N of the AC power supply. The output terminals of the LED drive control circuit 400 are electrically coupled to at least one LED 440.

The switching device 430 is equipped with an indicator D and includes a single-pole double-throw switch 432. A first branch (the branch on the right side in Figure 4) of the single-pole double-throw switch 432 is wire and a second branch (the branch on the left side in Figure 4) includes resistor R and indicator D coupled in series.

The LED drive control circuit 400 includes a semiconductor switch 410 and a voltage divider circuit 420. In the illustrated embodiment, the semiconductor switch 410 is a triode for alternating current (TRIAC) having three terminals: a first terminal 412 as the TRIAC gate, and a second terminal 414 and a third terminal 416 each as a respective electrode of the TRIAC. In the illustrated embodiment, the second terminal 414 is the lower terminal and the third terminal 416 is the upper terminal of the TRIAC.

The voltage divider circuit 420 includes a first voltage dividing resistor R1 and a second voltage dividing resistor R2 that are coupled in series. The voltage divider 420 may be configured differently in other embodiments. A node 424 of the first voltage dividing resistor R1 is electrically coupled between the terminal N of the AC power supply and the third terminal 416 of the semiconductor switch 410. A node 426 of the second voltage dividing resistor R2 is electrically coupled between the LED 440 and the switching device 430.

The LED drive control circuit 400 also includes a DIAC 470. A first terminal of the DIAC 370 is electrically coupled to a node 422 between the first voltage dividing resistor R1 and the second voltage dividing resistor R2. A second terminal of the DIAC 370 is electrically coupled to the first terminal 412 of the semiconductor switch 410.

The LED drive control circuit 400 further includes a current-limiting resistor 460. The current-limiting resistor 460 is electrically coupled between the LED 440 and the second terminal 414 of the semiconductor switch 410 to protect the LED 440. Moreover, in one embodiment, the current-limiting resistor 460 is electrically coupled between the LED 440 and the node 426 of the second voltage dividing resistor R2. In other embodiments, the current-limiting resistor 460 may be substituted with a current-limiting electronic component, chip, IC or diode to achieve the same effect. The LED 440 may comprise a single LED or multiple LEDs coupled in series or in parallel. In one embodiment, the LED 440 includes a plurality of LEDs having the same color or different colors.

Notably, the LED 440 and the current-limiting resistor 460 may optionally be electrically coupled between the third terminal 416 of the semiconductor switch 410 and the node 424 of the second voltage dividing resistor R2. Accordingly, the LED 440 may be electrically coupled between the current-limiting resistor 460 and the third terminal 416 of the semiconductor switch 410, and the node 426 of the first voltage dividing resistor R1 may be directly and electrically coupled to the second terminal 414 of the semiconductor switch 410. Additionally, in one embodiment, the current-limiting resistor 460 may be electrically coupled between the LED 440 and the third terminal 416 of the semiconductor switch 410.

The principle of operation of the LED drive control circuit 400 will now be described. The input terminal of the AC power supply provides AC voltage to the LED drive control circuit 400. When the switching device 430 is switched on, the single-pole double-throw switch 432 is switched to the first branch. Through the wire of the first branch, the input AC voltage is voltage divided by the voltage divider circuit 420. The resultant divided voltage is sufficient, i.e., above a threshold voltage level, to drive and turn on the DIAC 470, which in turn switch on the semiconductor switch 410 to conduct current, allowing current to flow through the LED 440 to emit light. When the switching device 430 is switched off, the single-pole double-throw switch 432 is switched to the second branch. Through the resistor R and the indicator D, the input AC voltage is voltage divided by the voltage divider circuit 420. The resultant divided voltage is insufficient to drive or switch on the DIAC 470 and thus the semiconductor switch 410 is switched off. As no current flows through the LED 440, the LED 440 is in a normal off state. Consequently, there is no power leakage or slight emission of light by the LED 440.

### Fourth Exemplary Implementation

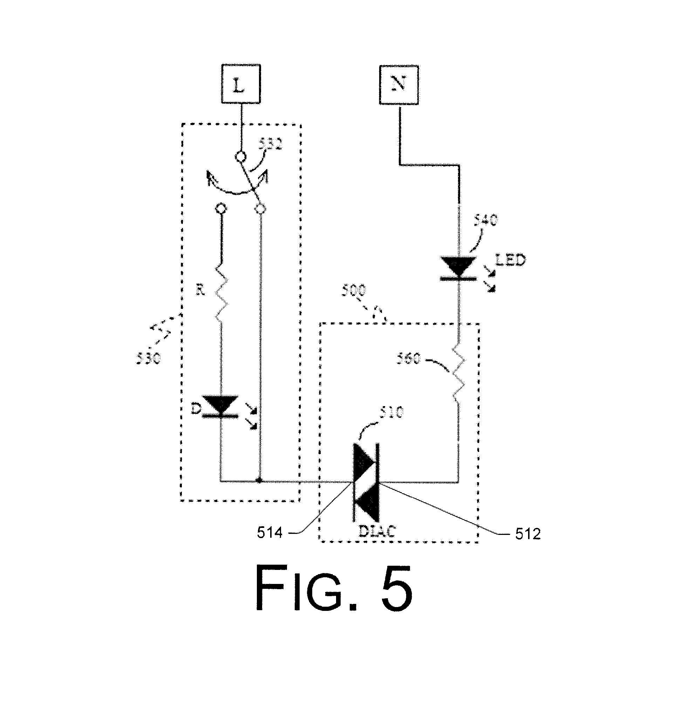

Figure 5 illustrates a LED drive control circuit 500 in accordance with a fourth embodiment of the present invention.

The LED drive control circuit 500 and a switching device 530 are coupled in series between terminals L and N of an AC power supply. At least one LED 540 is electrically coupled between the LED drive control circuit 500 and the terminal N of the AC power supply. The input terminal of the LED drive control circuit 500 is coupled to the switching device 530 and the terminal L of the AC power supply. The output terminal of the LED drive control circuit 500 is electrically coupled to the LED 540.

The switching device 530 is equipped with an indicator D and includes a single-pole double-throw switch 532. A first branch (the branch on the right side in Figure 5) of the single-pole double-throw switch 532 is wire and a second branch (the branch on the left side in Figure 5) includes resistor R and indicator D coupled in series.

The LED drive control circuit 500 includes a semiconductor switch 510. In the illustrated embodiment, the semiconductor switch 510 is a DIAC having two terminals. The first terminal 512 of the DIAC is electrically coupled to the LED 540. The second terminal 514 of the DIAC is electrically coupled to the switching device 530.

The LED drive control circuit 500 further includes a current-limiting resistor 560. The current-limiting resistor 560 is electrically coupled between the LED 540 and a second node 514 of the semiconductor switch 510 to protect the LED 540. Moreover, in the embodiment, the current-limiting resistor 560 may be electrically coupled between the LED 540 and the terminal N of the AC power supply. In other embodiments, the current-limiting resistor 560 may be substituted with a current-limiting electronic component, chip, IC or diode to achieve the same effect. The LED 540 may comprise a single LED or multiple LEDs coupled in series or in parallel. In one embodiment, the LED 540 includes a plurality of LEDs having the same color or different colors.

The principle of operation of the LED drive control circuit 500 will now be described. The input terminal of the AC power supply provides AC voltage to the LED drive control circuit 500. When the switching device 530 is switched on, the single-pole double-throw switch 532 is switched to the first branch. Through the wire of the first branch, the input AC voltage is sufficient, i.e., above a threshold voltage level, to drive and switch on the semiconductor switch 510 to conduct current, allowing current to flow through the LED 540 to emit light. When the switching device 530 is switched off, the single-pole double-throw switch 532 is switched to the second branch. The resultant voltage after the resistor R and the indicator D is insufficient to drive or switch on the semiconductor switch 510. As no current flows through the LED 540, the LED 540 is in a normal off state. Consequently, there is no power leakage or slight emission of light by the LED 540.

In the first exemplary implementation and the second exemplary implementation, the semiconductor switch may be an insulated gate bipolar transistor (IGBT). As an IGBT is a composite full-control voltage-drive semiconductor switch composed of a BJT and a FET, it has the characteristics of a BJT and a FET. Accordingly, based on the actual implementation needs, the semiconductor switch in the first embodiment and the second embodiment may optionally be substituted with an IGBT.

In the second exemplary implementation and the third exemplary implementation, a DIAC is coupled between a voltage divider circuit and a semiconductor switch to control the switching on and off of the semiconductor switch. Under certain circumstances, depending on the need, the DIAC might not be necessary.

In the third exemplary implementation and the fourth exemplary implementation, the input terminal does not have a rectifier circuit but a rectifier circuit may optionally be installed as in the case of the first or second exemplary implementation. Thus, the configuration may include a rectifier circuit depending on the need of the actual implementation.

In the above implementations, the output terminal has a current-limiting resistor although in some embodiments the current-limiting resistor might not be necessary. Thus, the configuration may include a current-limiting resistor depending on the need of the actual implementation.

### Fifth Exemplary Implementation

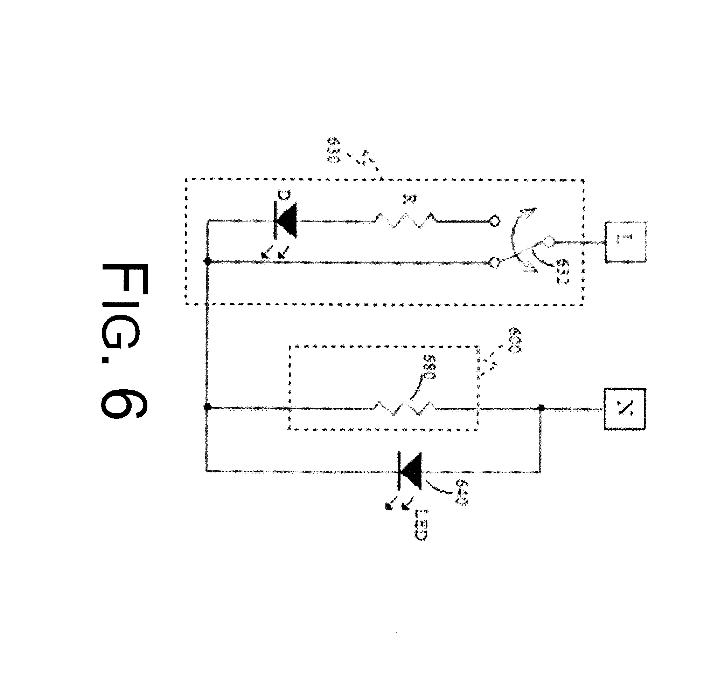

Figure 6 illustrates a LED drive control circuit 600 in accordance with a fifth embodiment of the present invention.

The LED drive control circuit 600 and a switching device 630 are coupled in series between terminals L and N of an AC power supply. At least one LED 540 is electrically coupled between the LED drive control circuit 500 and the terminal N of the AC power supply. The input terminal of the LED drive control circuit 600 is coupled to the switching device 630 and the terminals L and N of the AC power supply. The output terminal of the LED drive control circuit 600 is electrically coupled to the LED 640. The LED 640 and a resistor 680 of the LED drive control circuit 600 are coupled in parallel. The resistance of the resistor 680 is approximately equal to the resistance of the LED 640.

The switching device 630 is equipped with an indicator D and includes a single-pole double-throw switch 632. A first branch (the branch on the right side in Figure 6) of the single-pole double-throw switch 632 is wire and a second branch (the branch on the left side in Figure 6) includes resistor R and indicator D coupled in series. The LED 640 may comprise a single LED or multiple LEDs coupled in series or in parallel. In one embodiment, the LED 640 includes a plurality of LEDs having the same color or different colors.

The principle of operation of the LED drive control circuit 600 will now be described. The input terminal of the AC power supply provides AC voltage to the LED drive control circuit 600. When the switching device 630 is switched on, the single-pole double-throw switch 632 is switched to the first branch. The input AC voltage is supplied to the wire of the first branch, resulting in a large amount of current while the equivalent impedance of the LED 640 becomes relatively smaller. As a majority of the current flows through the LED 640, the LED 640 will operate normally. When the switching device 630 is switched off, the single-pole double-throw switch 632 is switched to the second branch and the input AC voltage is supplied to the resistor R and the indicator D. The total resistance of the LED 640 and the resistor 680 in parallel is insignificant relative to the total resistance of the circuit. Therefore, the current flowing through the LED 640 is very small such that it is insufficient to light up the LED 640. Consequently, there is no power leakage or slight emission of light by the LED 640.

Although specific embodiments of the invention have been disclosed, it will be understood by those of skill in the art that the foregoing and other changes in form and details may be made therein without departing from the spirit and the scope of the invention.

## Claims

1. A light-emitting diode (LED) drive control circuit, comprising:
an input terminal coupled to a switching device in series between terminals of a power supply, the switching device including a single-pole double-throw switch, the single-pole double-throw switch including a first branch and a second branch, the first branch including a wire, the second branch including a resistor and an indicator coupled in series;
an output terminal coupled to an LED; and
a semiconductor switch being either on or off, such that:
the semiconductor switch is switched on to turn on the LED when the single-pole double-throw switch is switched to the first branch; and
the semiconductor switch is switched off to turn off the LED when the single-pole double-throw switch is switched to the second branch.

2. The LED drive control circuit as recited in Claim 1, further comprising:
a voltage divider circuit coupled between the semiconductor switch and the switching device.

3. The LED drive control circuit as recited in Claim 2, wherein the voltage divider circuit comprises a first voltage dividing resistor and a second voltage dividing resistor, a node between the first voltage dividing resistor and the second voltage dividing resistor coupled to the semiconductor switch.

4. The LED drive control circuit as recited in Claim 2, wherein the semiconductor switch comprises a field effect transistor (FET), a bipolar junction transistor (BJT), or a triode for alternating current (TRIAC).

5. The LED drive control circuit as recited in Claim 2, further comprising:
a diode for alternating current (DIAC) coupled between the semiconductor switch and the voltage divider circuit.

6. The LED drive control circuit as recited in Claim 1, wherein the semiconductor switch comprises a DIAC.

7. The LED drive control circuit as recited in Claim 1, further comprising:
a rectifier circuit coupled between the switching device and the semiconductor switch.

8. The LED drive control circuit as recited in Claim 1, further comprising:
a current-limiting resistor coupled between the LED and the semiconductor switch.

9. The LED drive control circuit as recited in Claim 1, wherein the LED comprises one or more LEDs coupled in series or in parallel.

10. A light-emitting diode (LED) drive control circuit, comprising:
an input terminal coupled to a switching device in series between terminals of a power supply, the switching device including a single-pole double-throw switch, the single-pole double-throw switch including a first branch and a second branch, the first branch including a wire, the second branch including a resistor and an indicator coupled in series;
an output terminal coupled to an LED; and
a resistor coupled to the switching device, the resistor coupled to the LED in parallel, the resistor having a resistance approximately equal to a resistance of the LED.

11. A light-emitting diode (LED) drive control circuit, comprising:
an input terminal coupled to a switching device in series between terminals of a power supply, the switching device including a first branch and a second branch;
an output terminal coupled to an LED; and
a semiconductor switch driven to turn on or off the LED when the switch device is switched to the first branch or the second branch.

12. The LED drive control circuit as recited in Claim 11, wherein the semiconductor switch comprises a field effect transistor (FET), a bipolar junction transistor (BJT), or a triode for alternating current (TRIAC)

13. The LED drive control circuit as recited in Claim 11, wherein the semiconductor switch comprises an insulated gate bipolar transistor (IGBT).

14. The LED drive control circuit as recited in Claim 11, wherein the semiconductor switch comprises a diode for alternating current (DIAC).

15. The LED drive control circuit as recited in Claim 11, further comprising:
a current-limiting resistor coupled between the LED and the semiconductor switch.

16. The LED drive control circuit as recited in Claim 11, further comprising:
a voltage divider circuit coupled between the semiconductor switch and the switching device.

17. The LED drive control circuit as recited in Claim 16, further comprising:
a diode for alternating current (DIAC) coupled between the semiconductor switch and the voltage divider circuit.

18. The LED drive control circuit as recited in Claim 16, further comprising:
a rectifier circuit coupled between the switching device and the voltage divider circuit.

19. The LED drive control circuit as recited in Claim 11, further comprising:
a current-limiting resistor coupled between the LED and the semiconductor switch;
a voltage divider circuit coupled between the semiconductor switch and the switching device; and
a rectifier circuit coupled between the switching device and the voltage divider circuit.

20. The LED drive control circuit as recited in Claim 19, further comprising:
a diode for alternating current (DIAC) coupled between the semiconductor switch and the voltage divider circuit.
